# DEMANDE DE BREVET EUROPEEN

(11) **EP 2 398 091 A2**
(43) Date de publication de la demande: **21.12.2011**
(21) Numéro de dépôt: 11170827.7
(22) Date de dépôt: 21.06.2011
(51) Int. Cl.: H01M 2/20

(54) **Plaque d'interconnexion et distribution électrique avec fixation embarquée**

(30) Priorité: 21.06.2010 FR 1054917
(71) Demandeur: Lisi Automotive Former, 90101 Delle (FR); IDEALEC, 25300 Pontarlier (FR)
(72) Inventeur: Vennois, Fabien, 92800 Puteaux (FR); Rondot, Jacques, 25350 Mandeure (FR); Dacosta, Serge, 95720 Bouqueval (FR); Bisson, Didier, 25300 Doubs (FR); Camacho, Gabriel, 57310 Guenange (FR); Marmier, Régis, 39250 Cuvier (FR); Mestre, François, 25000 Besancon (FR)
(74) Mandataire: Thinat, Michel

(57) **Abrégé**

L'invention concerne un dispositif de connexion pour au moins deux cellules unitaires constituant une batterie électrique, comprenant au moins un moyen de connexion (1) au moins partiellement électriquement conducteur avec au moins deux emplacements de connexion.

Le dispositif comprend en outre un cache (4) adapté pour être fixé sur le ou les moyens de connexion (1) et comportant des alvéoles de maintien (41) pour recevoir des moyens de fixation par lesquels le ou chacun des moyen de connexion (1) est fixé sur les cellules unitaires.

## Description

L'invention concerne un dispositif de connexion pour au moins deux cellules unitaires constituant une batterie électrique.

L'invention concerne plus particulièrement un dispositif de connexion comprenant au moins un moyen de connexion, le ou chacun des moyens de connexion étant au moins partiellement électriquement conducteur et ayant au moins deux emplacements de connexion. Le dispositif de connexion de l'invention est adapté aussi bien pour la réalisation de connexions de cellules unitaires adjacentes l'une à l'autre que pour la liaison entre cellules unitaires non adjacentes.

Actuellement, les batteries pour différents types de véhicule, par exemple pour des véhicules automobiles, sont composées de cellules unitaires reliées entre elles respectivement en série et/ou en parallèle selon la tension nominale et le débit de courant nominal souhaité. La liaison entre les différentes cellules est réalisée par des conducteurs individuels, notamment des câbles. Il en résulte principalement deux problèmes. L'un concerne la situation d'un grand nombre de cellules unitaires à relier. Dans ce cas, il y a un grand nombre de conducteurs à monter et, en conséquence, aussi un temps de montage assez important à prévoir pour constituer toutes les liaisons de la batterie. L'autre problème est indépendant du nombre de cellules à relier : il concerne le fait que les pôles des cellules et les cosses des conducteurs ne sont pas protégés.

Le but de l'invention est de remédier à ces inconvénients.

Le but de l'invention est atteint avec un dispositif de connexion du type défini en début de la présente description, qui comprend un moyen de connexion au moins partiellement électriquement conducteur avec au moins deux emplacements de connexion disposés selon les emplacements de bornes électriques des cellules à relier, et qui comprend en outre un cache adapté pour être fixé sur le moyen de connexion et comportant des alvéoles de maintien pour recevoir des moyens de fixation par lesquels le moyen de connexion est fixé sur les cellules unitaires constituant la batterie électrique.

L'invention peut également présenter l'une au moins des caractéristiques supplémentaires suivantes, considérées isolément ou selon toutes combinaisons techniquement possibles :
- chaque emplacement de connexion comprend un trou de passage adapté pour être traversé par un des moyens de fixation ;
- le moyen de connexion comprend une plaquette réalisée en une matière électriquement conductrice ;
- la plaquette est pourvue de deux dégagement surélevés formés sur des bords opposés de la plaquette ;
- le moyen de connexion comprend une plaque réalisée en une matière électriquement isolante et pourvue, sur une de ses deux faces opposées, de pistes électriquement conductrices servant à la connexion électrique des cellules entre elles ;
- la plaque est pourvue, sur la face comportant des pistes conductrices, à chaque emplacement de connexion, d'un plot cylindrique creux et au moins partiellement électriquement conducteur et en contact électrique avec la piste conductrice correspondante ;
- le cache est une pièce réalisée en une seule pièce réalisée en une matière électriquement isolante avec un fond sur lequel s'élève, pour chaque emplacement de connexion du moyen de connexion, un dôme délimitant l'alvéole de maintien correspondant du cache ;
- le cache comprend des moyens d'encliquetage adaptés pour la fixation du cache sur le moyen de connexion ;
- le cache comprend à chaque emplacement de connexion sous le dôme un rétrécissement annulaire délimitant l'alvéole vers le fond du cache ;
- chaque dôme comporte une ouverture axiale permettant l'accès au moyen de fixation pour l'actionner ;
- les dimensions des alvéoles de maintien du cache et des trous de passage du moyen de connexion sont supérieures à celles des moyens de fixation pour pouvoir assurer aux moyens de fixation un jeu transversal par rapport à leur axe de montage ;
- le moyen de connexion comprend des organes permettant d'effectuer des mesures de tension électrique et/ou des mesures thermiques en chaque point de connexion ;
- les moyens de fixation sont des vis et les bornes électriques sont taraudées afin de pouvoir coopérer avec les vis pour la fixation du moyen de connexion sur les cellules unitaires ;
- les moyens de fixation sont des écrous et les bornes électriques sont filetées afin de pouvoir coopérer avec les écrous pour la fixation du moyen de connexion sur les cellules unitaires ;
- le nombre d'alvéoles du cache et leur agencement ainsi que le nombre d'emplacements de connexion du moyen de connexion et leur agencement sont identiques au nombre et à la disposition des bornes électriques de l'ensemble des cellules unitaires à connecter entre elles ;
- le dispositif est adapté pour pouvoir servir à la fois à la connexion électrique des cellules entre elles et à la fixation mécanique des cellules entre elles et éventuellement par rapport à un support commun de celles-ci.

D'autres caractéristiques et avantages de la présente invention ressortiront de la description ci-après de trois modes de réalisation représentés dans les dessins annexés dans lesquels
la figure 1 représente un dispositif de connexion selon un premier mode de réalisation de l'invention,
la figure 2 représente le dispositif de la figure 1 en une vue éclatée et avec deux vis,
les figures 3A, 3B représentent le dispositif de la figure 1 avec les vis en des perspectives permettant l'indication du jeu de positionnement des vis,
la figure 4 représente le dispositif de la figure 1 en voie de montage sur des bornes de deux cellules unitaires à relier l'une à l'autre,
la figure 5 représente, en détail de la figure 4, la connexion établie entre des deux cellules unitaires,
la figure 6 représente une vue en perspective sur la face supérieure d'un dispositif de connexion selon un deuxième mode de réalisation de l'invention, le dispositif étant en voie de montage sur une batterie,
la figure 7 représente le dispositif de la figure 6 en une vue en perspective sur sa face inférieure,
la figure 8 représente le dispositif de la figure 6 en une vue éclatée,
la figure 9 représente une coupe axiale à travers un alvéole du dispositif de l'invention avec indication du jeu de positionnement de la vis,
les figures 10 et 11 représentent la position d'une vis dans un alvéole respectivement avant et après vissage du dispositif de l'invention sur des cellules unitaires,
la figure 12 représente la protection de la vis par le sommet d'un alvéole,
la figure 13 représente un dispositif de connexion selon un troisième mode de réalisation de l'invention,
la figure 14 représente le dispositif de la figure 13 en une vue éclatée et avec deux vis, les figures 16a, 16b, 16c représentent des parties du dispositif de la figure 13 en des perspectives permettant l'indication du jeu de positionnement des vis,
la figure 16 représente le dispositif de la figure 13 en voie de montage sur des bornes de deux cellules unitaires à relier l'une à l'autre,
la figure 17 représente, en détail de la figure 16, la connexion établie entre des deux cellules unitaires,
les figures 18, 19 représentent le dispositif de la figure 13 en cours de fermeture des capots,
la figure 20 représente le dispositif de la figure 13 en état monté et avec des capots fermés.

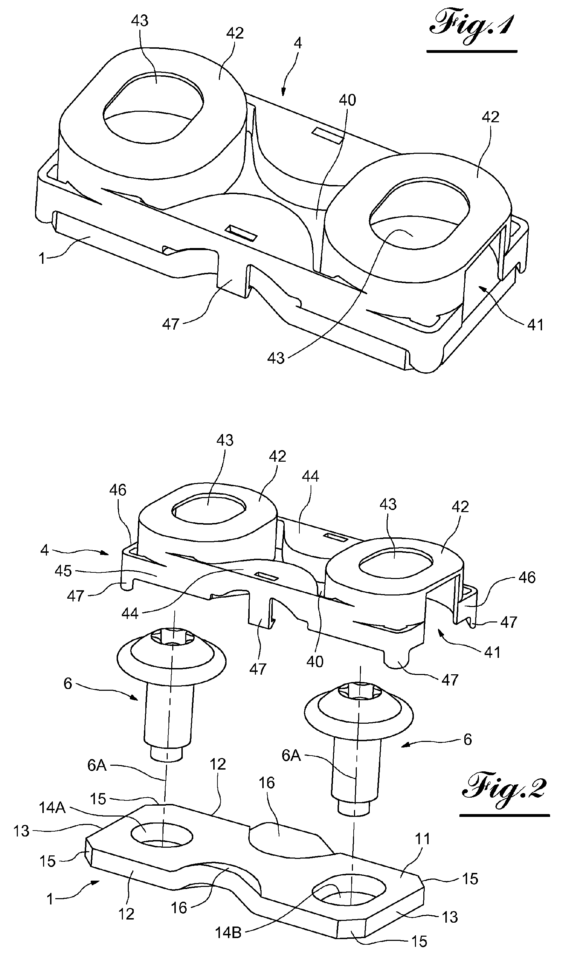

La figure 1 représente un dispositif de connexion selon un premier mode de réalisation de l'invention pour relier électriquement l'une à l'autre, en série, deux cellules unitaires d'une batterie électrique. Ce dispositif comprend un moyen de connexion 1 et un cache 4 fixé sur le moyen de connexion 1. Alors que le moyen de connexion 1 est réalisé entièrement en une matière électriquement conductrice, le cache 4 est réalisé en une matière électriquement isolante. Le cache 4 est réalisé en une seule pièce et formé avec un fond 40 sur lequel s'élèvent deux dômes 42 enfermant chacun un alvéole de maintien 41. Les alvéoles de maintien 41 sont adaptés pour recevoir, chacun, un moyen de fixation par lequel le moyen de connexion 1 est fixé respectivement sur l'une ou sur l'autre des deux cellules unitaires à relier l'une à l'autre. Chacun des dômes 42 est pourvu d'une ouverture axiale 43 donnant accès à l'alvéole 41 afin de pouvoir actionner le moyen de fixation.

La figure 2 représente le dispositif de l'invention selon le premier mode de réalisation en une vue éclatée montrant le moyen de connexion 1, le cache 4 et deux moyens de fixation 6 sous la forme de vis ayant chacune un axe longitudinal 6A.

Selon l'exemple choisi, le moyen de connexion 1 est constitué par une plaquette 11 plane et de forme générale allongée avec deux bords parallèles longitudinaux 12 et deux bords parallèles transversaux 13. Les bords 12 et 13 se rejoignent par des bords obliques 15. La plaquette 11 comporte deux trous de passage 14 dont les dimensions sont adaptées à celles des vis 6 qu'ils doivent recevoir. Dans l'exemple représenté, qui n'est nullement limitatif, un des deux trous, le trou 14A, a une section transversale circulaire alors que l'autre trou, le trou 14B, est un trou oblong.

La plaquette 11 est réalisée de préférence en cuivre et est pourvue, au centre de chacun de ses bords longitudinaux 12, d'un dégagement surélevé 16 adapté pour coopérer avec des moyens d'attache du cache 4, comme expliqué ci-après.

Le cache 4 est formé à partir du fond 40 délimité par deux bords parallèles longitudinaux 45 et deux bords parallèles transversaux 46 et comporte, entre les deux dômes 42 enfermant chacun un alvéole de maintien 41, deux parties demi-cylindriques convexes 44 dont la forme est adaptée à celle des dégagements surélevés 16 de la plaquette 11. A partir des parties 44 s'étendent, vers le côté opposé du fond 40, deux crochets 47 adaptés pour être engagés sous les dégagements surélevés 16 de la plaquette 11 lorsque le cache 4 doit être fixé sur la plaquette 11.

Les quatre coins du cache 4, c'est-à-dire les jonctions de chacun des bords longitudinaux 45 avec un bord correspondant transversal 46, sont prolongés du côté opposé par rapport aux dômes 42 par des formes 47 afin de faciliter le positionnement du cache 4 sur la plaquette 11.

Comme la figure 2 le montre également, l'assemblage du dispositif de l'invention se fait, dans l'ordre des étapes, par insertion des deux vis 6 dans les trous de passage 14 de la plaquette 11, suivie de la pose du cache 4 sur la plaquette 11 et sa fixation par encliquetage. De cette manière, chaque vis est maintenue dans son logement.

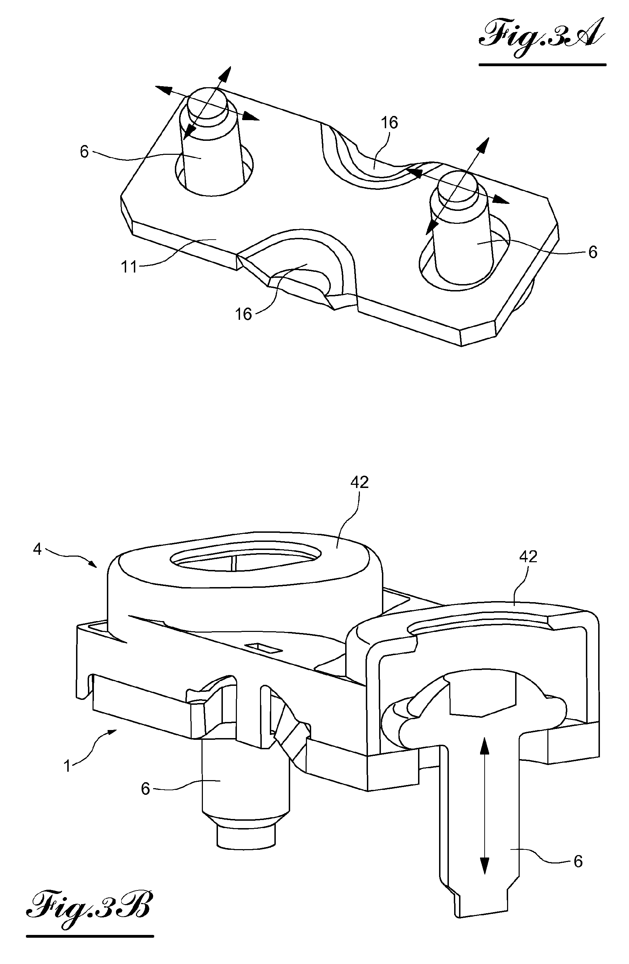

Les figures 3A et 3B représentent le jeu de positionnement des vis 6 respectivement dans les trous de passage 14A, 14B de la plaquette 11 et dans les alvéoles 41 du cache 4 par des flèches.

La figure 3A représente la plaquette 11 en une vue sur sa face inférieure afin de mieux voir le passage du corps des vis 6 à travers les trous de passage 14A, 14B. On voit plus particulièrement sur cette figure que, indépendamment de la forme de chacun des trous, c'est-à-dire s'il s'agit d'un trou rond ou d'un trou oblong, le diamètre ou la largeur minimale des trous de passage 14 est supérieure au diamètre du corps des vis 6 pour assurer aux vis 6 un jeu en les deux dimensions X, Y transversales aux axes des vis. De cette manière, il est possible de rattraper les défauts de positionnement des cellules de batterie, notamment un décalage de positionnement des contacts de ces cellules.

La figure 3B représente le dispositif de l'invention en une vue en perspective avec coupe axiale de l'un des alvéoles 41 et de la vis correspondante 6 pour montrer la liberté de mouvement de la vis 6 en Z à l'intérieur de l'alvéole 41 pour pouvoir rattraper les défauts de positionnement sur les cellules de batterie.

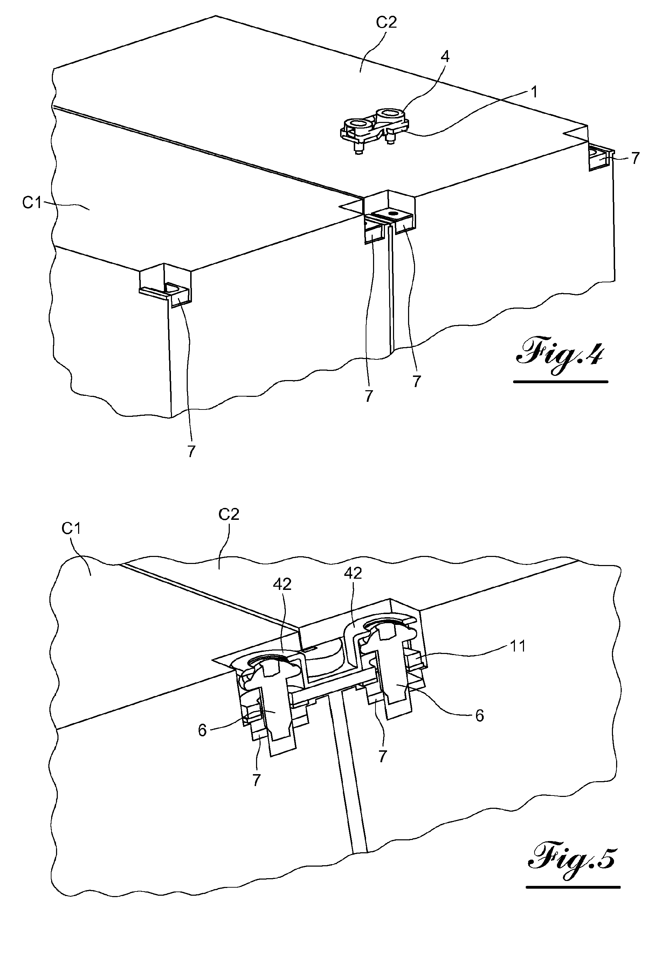

La figure 4 représente deux cellules unitaires C1, C2 d'une batterie B, adjacentes l'une à l'autre, et orientées de façon à pouvoir les relier l'une à l'autre en série au moyen du dispositif selon le premier mode de réalisation de l'invention, représenté sur la figure 1. Chacune des cellules C1, C2 comporte à cet effet une borne électrique 7. La flèche indique la direction d'approche et de pose du dispositif sur les deux bornes 7. Chacune des bornes 7 est pourvue d'un écrou de vissage embarqué qui est adapté à la vis qui y sera engagée. Grâce à cette disposition, le dispositif de l'invention et plus particulièrement le moyen de connexion 1 sera vissé sur l'une et sur l'autre des deux bornes 7 et peut établir ainsi le contact électrique entre les deux cellules unitaires.

La figure 5 représente la connexion électrique entre les deux bornes 7 en plus de détails : le moyen de connexion 1 est posé sur les bornes 7, et les vis 6 commencent à être engagées dans les écrous des deux bornes.

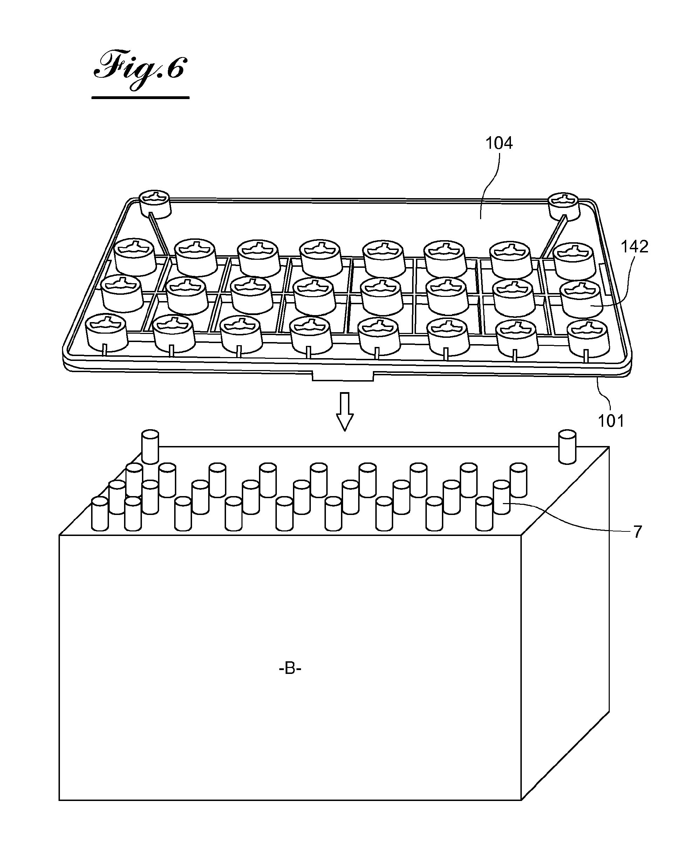

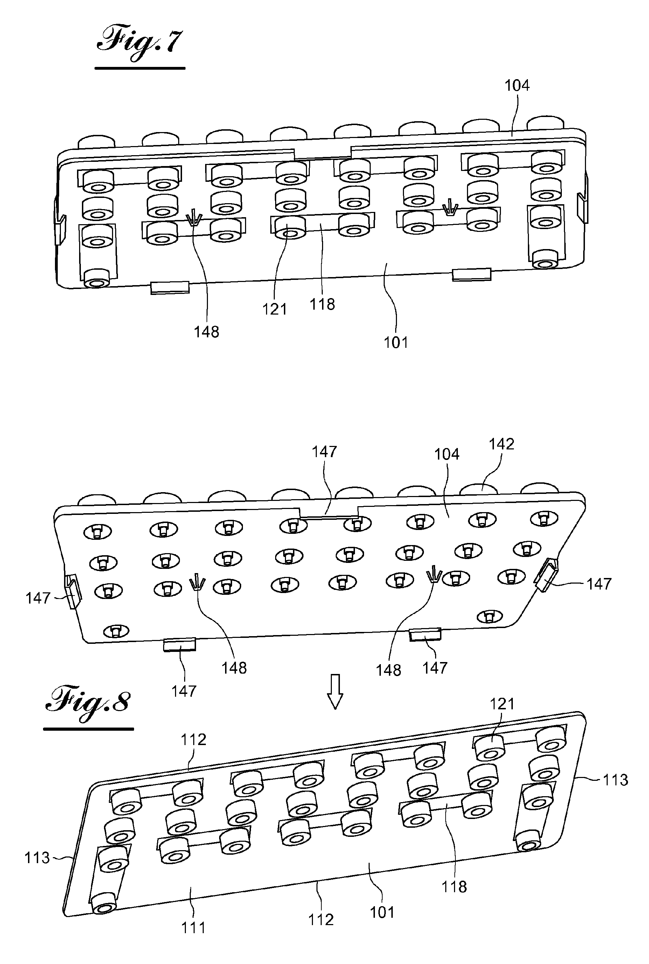

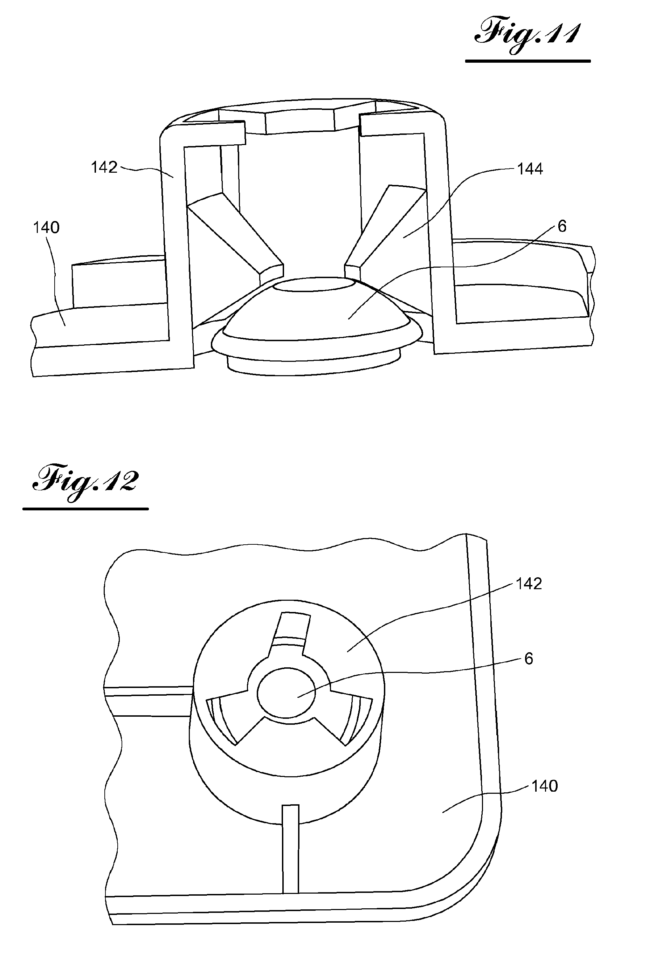

Les figures 6 à 12 représentent un dispositif de connexion selon un deuxième mode de réalisation de l'invention et son application à une batterie B constituée d'une pluralité de cellules unitaires. Alors que la figure 6 représente la face supérieure du dispositif et, par une flèche, son approche à la batterie B au moment du montage du dispositif sur la batterie, les figures 7 et 8 représentent la face inférieure du dispositif.

Les cellules unitaires de la batterie B doivent être reliées entre elles de façon à ce que la batterie ait une tension nominale, selon l'utilisation prévue, entre 12 V et 600 V. Pour pouvoir obtenir un tel raccordement des cellules unitaires entre elles, celles-ci sont pourvues de bornes électriques 7.

Les bornes électriques 7 servent en même temps pour la fixation mécanique des cellules au dispositif de connexion. Des points de fixation supplémentaires peuvent être prévus.

De plus, le dispositif de l'invention comprend, selon ce deuxième mode de réalisation, une plaque de connexion 101 conformée pour établir, par celle de ses deux faces opposées qui est destinée à être orientée vers la batterie, les contacts électriques et une plaque de montage 104 conformée pour recouvrir la plaque de connexion 101.

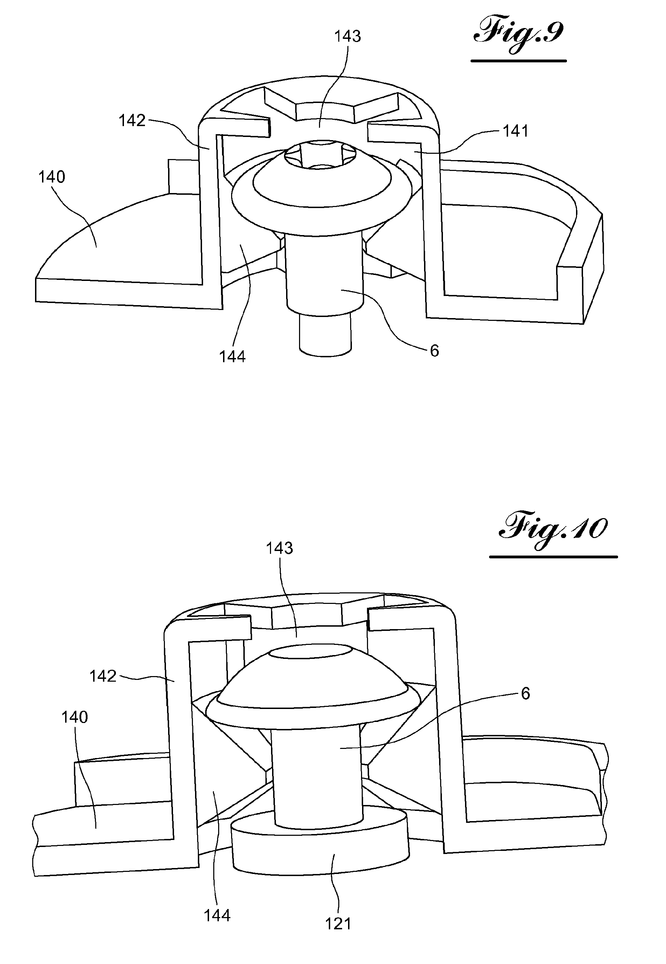

Sur un fond 140 de la plaque de montage 104 s'élèvent des dômes 142 dont chacun enferme un alvéole de maintien 141 (voir figure 9) adapté pour recevoir un moyen de fixation par lequel la plaque de connexion 101 est fixé sur les cellules unitaires à relier les unes aux autres. Et sur la plaque de connexion 101 s'élèvent, sur la face destinée à être orientée vers la batterie et comportant des pistes conductrices 118, des plots de connexion 121. La disposition des pistes 118 et des plots 121 est déterminée par le raccordement électrique des cellules unitaires à mettre en oeuvre.

Selon l'exemple représenté, le dispositif de l'invention comprend vingt-six emplacements de connexion correspondant aux vingt-six bornes électriques 7 de la batterie B qui sont disposées en trois rangs de huit bornes et un quatrième rang avec deux bornes supplémentaires pour le raccordement de la batterie à un réseau de consommateurs.

La plaque de connexion 101 et la plaque de montage 104 reprennent cette disposition des bornes électriques respectivement pour les emplacements de connexion 121 et les dômes 142. Cette configuration des deux plaques de connexion 101 et de montage 104 répond au principe suivant.

La plaque de connexion 101 est fixée sur les cellules unitaires à l'aide de vis 6 traversant la plaque de connexion 101 aux endroits des emplacements de connexion 121 et en s'engageant dans les bornes électriques 7 qui sont taraudées à cet effet. Les liaisons électriques entre les différentes bornes électriques 7 sont établies par les pistes conductrices 118 réalisées sur la plaque de connexion 101 du côté destiné à être en regard de la batterie.

Pour des raisons pratiques, mais de manière techniquement nullement nécessaire, la plaque de connexion 101 est pourvue aux emplacements de connexion 121 de plots de connexion formés en saillie par rapport aux pistes conductrices 118.

Afin de pouvoir exploiter pleinement le fait que les liaisons électriques entre les cellules unitaires ne sont plus réalisées par une pluralité de conducteurs individuels mais par une plaque unique, les vis 6 sont montées sur la plaque de montage 104 qui est réalisée en un matériau électriquement isolant (matière plastique dans l'exemple décrit et représenté) et qui est formée de manière à maintenir les vis en position haute jusqu'au début du montage. En même temps, les vis sont maintenues à des emplacements à la fois précis et permettant aux vis un certain jeu transversal par rapport à leur axe de montage afin de pouvoir compenser des imprécisions d'alignement des bornes électriques 7. La plaque de montage 104 comprend par ailleurs des clips 147 et 148 par lesquels elle est fixée sur la plaque de connexion 101. Les deux plaques sont alors positionnées ensemble sur les cellules constituant la batterie B.

Grâce à cette disposition de l'invention, toutes les vis peuvent être vissées simultanément, donc en une seule opération, moyennant un outil équipé du nombre nécessaire de têtes visseuses.

Comme cela est représenté en détails sur les figures 9 à 12, les dômes 142 dans lesquels les vis 6 sont retenues par leur tête avant montage, comprennent des clips 144 déformables et suffisamment souples pour pouvoir se déformer aussi bien au cours du vissage afin de laisser sortir les têtes des vis des alvéoles 141 et, de manière analogue, pour pouvoir se déformer au cours d'un démontage de la batterie, afin de laisser rentrer les têtes de vis dans les alvéoles.

Les dômes 142 sont formés dans la partie supérieure de façon à former une cape de protection et d'isolation électrique au-dessus de chacune des vis tout en permettant, par une ouverture axiale 143, l'introduction d'un outil dans l'alvéole et l'engagement de cet outil dans la partie transmission d'effort de la vis.

Dans la partie inférieure, les dômes 142 sont ouverts par la face inférieure de la plaque de montage.

Généralement, la plaque de montage 104 reste fixée sur la plaque de connexion 101 le temps que la batterie ainsi constituée est utilisée. Cependant, il est également concevable, pour répondre à des situations particulières d'exploitation de l'invention, de retirer la plaque de montage 104 lorsque la plaque de connexion 101 est vissée sur les cellules unitaires et de replacer la plaque de montage 104 sur la plaque de connexion 101 seulement en préparation d'un démontage de la batterie B.

Selon une variante de réalisation non représentée dans les dessins, il est également concevable que la plaque de connexion ne soit pas vissée sur les bornes électriques 7 des cellules de la batterie mais qu'elle soit vissée, ou fixée par d'autres moyens de fixation, sur le corps des cellules afin d'éviter une fixation mécanique de la plaque de connexion sur les bornes électriques 7.

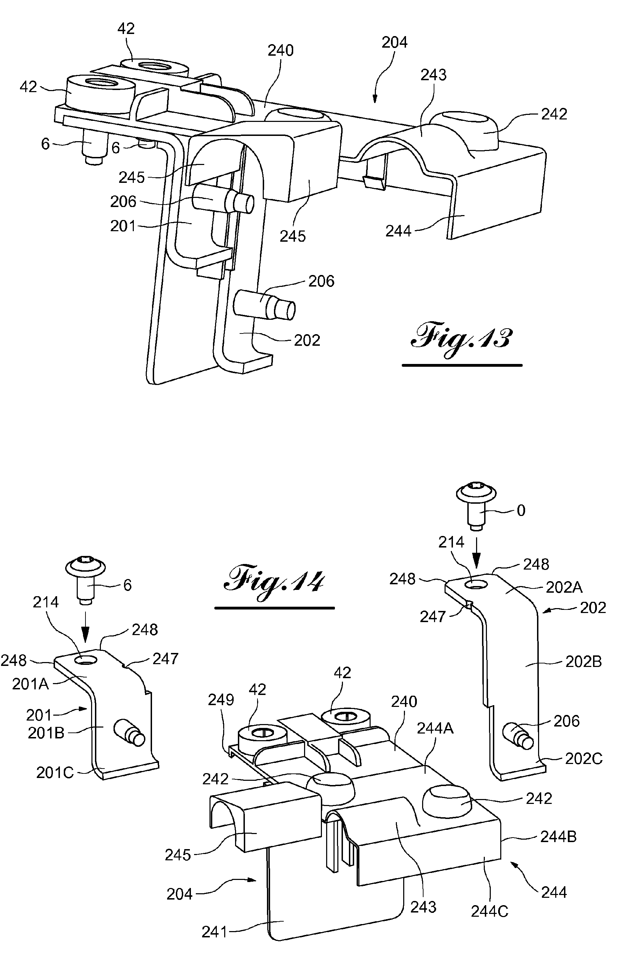

Les figures 13 à 20 représentent le dispositif de l'invention suivant un troisième mode de réalisation.

Par opposition aux dispositifs de connexion selon le premier et le deuxième mode de réalisation de l'invention, le dispositif de connexion selon le troisième mode de réalisation de l'invention est adapté pour établir une liaison ou connexion électrique entre deux cellules unitaires adjacentes et un câble de branchement par lequel ces deux cellules unitaires doivent être reliées électriquement à des cellules unitaires plus éloignées ou à des équipements électriques.

Le dispositif de connexion selon le troisième mode de réalisation comprend deux moyens de connexion 201, 202 et un cache 204 adapté pour être fixé avec les moyens de connexion 201, 202, sur les bornes des deux cellules adjacentes. Chacun des moyens de connexion 201, 202 est réalisé en une matière électriquement conductrice, par deux pliages en sens opposé, d'une plaquette allongée et a pour fonction de porter respectivement la borne positive et la borne négative sur le côté des cellules adjacentes. A cette fin, un goujon 206 est serti ou maintenu par tout autre moyen, sur chacun des moyens de connexion 201, 202.

Pour des applications particulières, il est concevable que les moyens de connexion 201, 202 se présentent sous la forme de barrettes toutes plates ou sous la forme d'éléments allongés pliés par exemple une fois seulement ou pliés à d'autres angles que 90°.

La figure 14 représente le dispositif de connexion selon le troisième mode de réalisation en une vue éclatée et avec des flèches indiquant la mise en place des différents éléments.

Le moyen de connexion 201 est une barrette coudée avec une première partie 201A pourvue d'une perforation 214, une deuxième partie 201B coudée à 90° par rapport à la première partie 201A et pourvue d'un goujon fileté 206, et une troisième partie 201C coudée à 90° par rapport à la deuxième partie 201B et orientée dans le sens opposé par rapport à la première partie 201A. La première partie 201A de la barrette 201 est formée avec une encoche latérale 247 et deux angles 248 en biseau, qui sont destinés tous les trois à coopérer avec des ergots 249 formés sur la face inférieure du cache 204 pour assurer un positionnement exact du moyen de connexion 201 sur le cache 204.

Le moyen de connexion 202 est une barrette coudée avec une première partie 202A pourvue d'une perforation 214, une deuxième partie 202B coudée à 90° par rapport à la première partie 202A et pourvue d'un goujon fileté 206, et une troisième partie 202C coudée à 90° par rapport à la deuxième partie 202B et orientée dans le sens opposé par rapport à la première partie 202A. La première partie 202A de la barrette 202 est formée avec une encoche latérale 247 et deux angles 248 en biseau, qui sont destinés tous les trois à coopérer avec des ergots 249 formés sur la face inférieure du cache 204 pour assurer un positionnement exact du moyen de connexion 202 sur le cache 204.

Le cache 204 est réalisé en une seule pièce avec une partie de base 240, une paroi 241 disposée perpendiculairement au fond 240 et servant comme isolant entre les cellules unitaires et les éléments de connexion 201, 202, ainsi que deux parties 244, 245 reliées à la partie de base 240 par des charnières à film et formant des capots pour couvrir les goujons 206.

La partie de base 240 présente la forme d'un fond sur lequel s'élèvent deux dômes 42 ayant la même forme et la même fonction que le dôme 42 du cache 4 selon le premier mode de réalisation et qui délimitent chacun un alvéole de maintien 41. Les alvéoles 41 sont adaptés pour recevoir chacun la tête d'une vis 6 préalablement insérée dans la perforation 214 respectivement du moyen de connexion 201 et du moyen de connexion 202.

La partie 244 du cache 204 comprend une paroi 244A sur laquelle s'élèvent un dôme 242 et un dégagement surélevé 243, ainsi que des parois latérales 244B et 244C disposées perpendiculairement les unes par rapport aux autres.

La partie 245 est formée elle-même comme un cache demi-cylindrique creux.

Sur la figure 14, les flèches indiquent l'assemblage du dispositif de connexion. En premier les vis 6 sont insérées dans les trous de perforation 214 des éléments de connexion 201, 202. Ensuite, les éléments de connexion 201, 202 sont glissés latéralement par un côté et par l'autre sous le cache 204. Ainsi, la première partie de chacun des moyens de connexion 201, 202 est placée sous le dôme 42 correspondant et la deuxième partie de chacun des moyens de connexion 201, 202 est en appui sur la paroi 241 du cache 204.

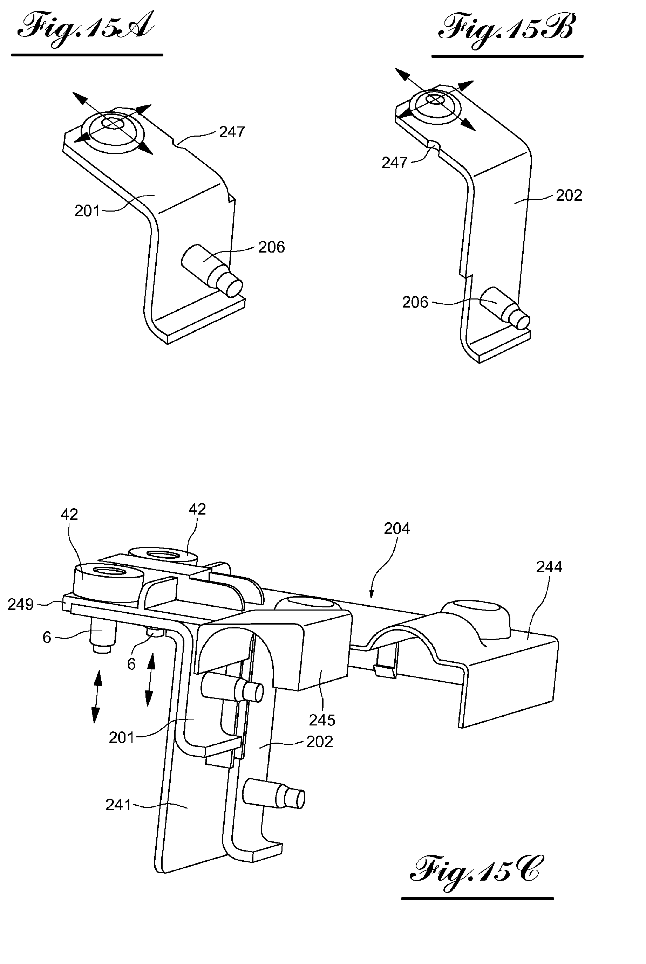

Les figures 15a à 15c sont des vues en perspective dont les figures 15a et 15b représentent les deux éléments de connexion 201, 202 et dont la figure 15c représente le cache 204 en assemblage avec les deux éléments de connexion 201, 202. Ces figures permettent d'apprécier, par les flèches rapportées aux dessins, les degrés de liberté du mouvement des vis 6 permettant de rattraper des défauts de positionnement des cellules unitaires de la batterie. Ainsi, grâce à des diamètres de perforation 214 supérieurs à celui des vis, les vis 6 peuvent se déplacer transversalement par rapport à leur axe. De plus, les vis 6 peuvent se déplacer axialement dans la limite des alvéoles 41.

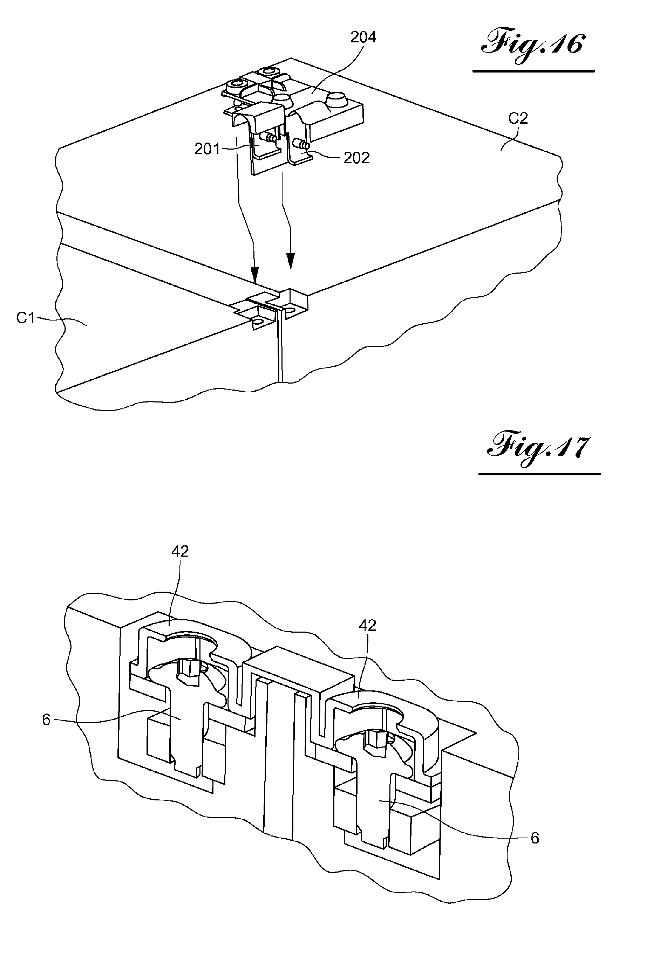

La figure 16 représente la jonction de deux cellules unitaires adjacentes C1, C2. Cette figure montre également un dispositif de connexion selon le troisième mode de réalisation de l'invention en voie d'être disposé sur la jonction des deux cellules unitaires, la direction du mouvement étant indiquée par une flèche.

La figure 17 est une vue en détails de la jonction de deux cellules unitaires représentée sur la figure 16. Sur cette vue, le dispositif de connexion, représenté en une coupe partielle, est à sa place.

On remarque sur cette figure plus particulièrement les deux dômes 42 du cache 204 des moyens de connexion 201, 202 ainsi que les vis 6.

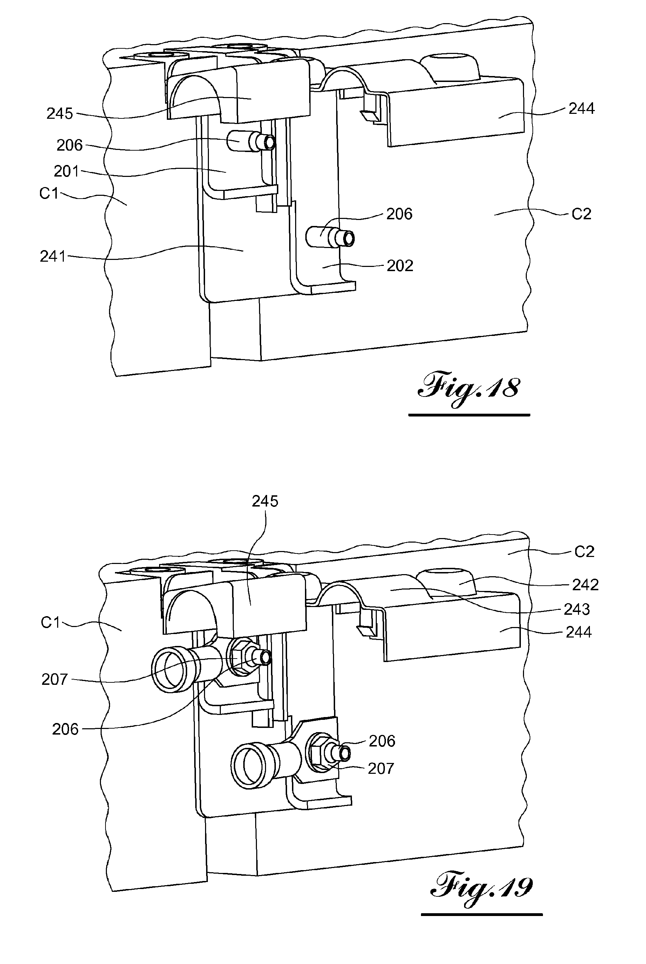

La figure 18 représente le dispositif de connexion en une vue en perspective lorsqu'il est à sa place. Les capots 244, 245 sont encore ouverts. De ce fait, les deux goujons 206 respectivement du moyen de connexion 201 et du moyen de connexion 202 sont visibles.

La figure 19 représente le dispositif de la figure 18, mais avec deux connecteurs fixés sur les deux goujons 206 moyennant des écrous 207.

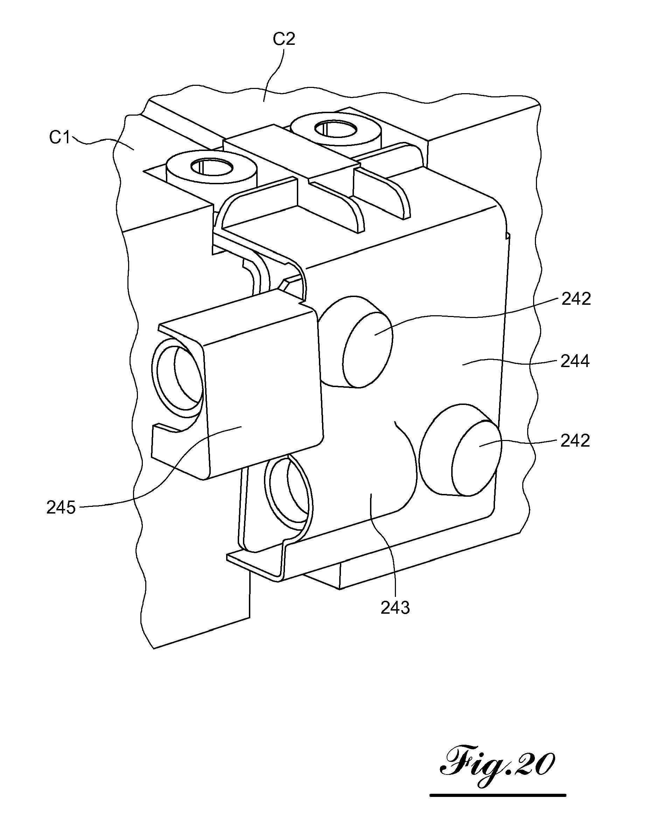

La figure 20 représente la jonction des deux cellules unitaires avec le dispositif de connexion mis en place et les capots de protection 244, 245 baissés pour couvrir les deux goujons 206 et les connecteurs vissés sur ces goujons.

## Revendications

1. Dispositif de connexion pour au moins deux cellules unitaires (C1, C2) constituant une batterie électrique (B), comprenant au moins un moyen de connexion (1 ; 101 ; 201) au moins partiellement électriquement conducteur avec au moins deux emplacements de connexion (2),
**caractérisé en ce que** le dispositif comprend en outre un cache (4 ; 104 ; 204) adapté pour être fixé sur le ou les moyens de connexion (1 ; 101 ; 201) et comportant des alvéoles de maintien (41 ; 141 ; 241) pour recevoir des moyens de fixation (6) par lesquels le ou moyen de connexion (1 ; 101 ; 201) est fixé sur les cellules unitaires.

2. Dispositif selon la revendication 1, **caractérisé en ce que** le moyen de connexion (1 ; 101 ; 201) comprend au moins un trou de passage (14 ; 114 ; 214) adapté pour être traversé par un des moyens de fixation (6).

3. Dispositif selon la revendication 1 ou 2, **caractérisé en ce que** le moyen de connexion (1) comprend une plaquette (11 ; 211) réalisée en une matière électriquement conductrice.

4. Dispositif selon la revendication 3 dépendante de la revendication 2, **caractérisé en ce que** la plaquette (11) est pourvue de deux dégagement surélevés (16) formés sur des bords opposés (12) de la plaquette (11).

5. Dispositif selon la revendication 3 dépendante de la revendication 2, **caractérisé en ce que** la plaquette (11) comprend un trou de passage (14 ; 114 ; 214) et un goujon fileté (206).

6. Dispositif selon la revendication 1 ou 2, **caractérisé en ce que** le moyen de connexion (101) comprend une plaque (111) réalisée en une matière électriquement isolante et pourvue, sur une (117) de ses deux faces opposées (116, 117), de pistes électriquement conductrices (118) servant à la connexion électrique des cellules entre elles.

7. Dispositif selon la revendication 6, **caractérisé en ce que** la plaque (111) est pourvue, sur la face (117) comportant des pistes conductrices (118), à chaque emplacement de connexion (2), d'un plot (121) cylindrique creux et au moins partiellement électriquement conducteur et en contact électrique avec la piste conductrice (118) correspondante.

8. Dispositif selon l'une quelconque des revendications 1 à 7, **caractérisé en ce que** le cache (4 ; 104 ; 204) est une pièce réalisée en une seule pièce en une matière électriquement isolante avec un fond (40 ;140) sur lequel s'élève, pour chaque emplacement de connexion (2) du moyen de connexion (1 ; 101), un dôme (42 ; 142) délimitant l'alvéole de maintien (41 ; 141) correspondant du cache (4 ; 104).

9. Dispositif selon la revendication 8, **caractérisé en ce que** le cache (4 ; 104 ; 204) comprend des moyens d'encliquetage (47 ; 147) adaptés pour la fixation du cache (4 ; 104) sur le moyen de connexion (1 ; 101).

10. Dispositif selon la revendication 8 ou 9, **caractérisé en ce que** le cache (104) comprend à chaque emplacement de connexion (2) sous le dôme (142) un rétrécissement annulaire (143) délimitant l'alvéole (141) vers le fond (140) du cache 104).

11. Dispositif selon l'une quelconque des revendications 8 à 10, **caractérisé en ce qu'**au moins deux des dômes (42 ; 142) comportent une ouverture axiale (43 ; 143) permettant l'accès au moyen de fixation (6) pour l'actionner.

12. Dispositif selon l'une quelconque des revendications 1 à 11, **caractérisé en ce que** les dimensions des alvéoles de maintien (42) du cache (4 ; 104 ; 204) et des trous de passage (14) du moyen de connexion (1 ; 201, 202) sont supérieures à celles des moyens de fixation (6) pour pouvoir assurer aux moyens de fixation (6) un jeu transversal par rapport à leur axe longitudinal (6A).

13. Dispositif selon l'une quelconque des revendications 1 à 12, **caractérisé en ce que** le moyen de connexion (1 ; 101) comprend des organes permettant d'effectuer des mesures de tension électrique et/ou des mesures thermiques en chaque point de connexion.

14. Dispositif selon l'une quelconque des revendications 1 à 13, **caractérisé en ce que** les moyens de fixation sont des vis (6 ; 206).

15. Dispositif selon l'une quelconque des revendications 1 à 13, **caractérisé en ce que** les moyens de fixation sont des écrous (207).
